(19) Europäisches Patentamt
European Patent Office
Office européen des brevets

(11) **EP 4 513 588 A1**

(12) **EUROPÄISCHE PATENTANMELDUNG**

(43) Veröffentlichungstag:
26.02.2025   Patentblatt 2025/09

(21) Anmeldenummer: 23192925.8

(22) Anmeldetag: **23.08.2023**

(51) Internationale Patentklassifikation (IPC):
*H01M 4/139* [(2010.01)]   *H01M 4/62* [(2006.01)]
*H01M 10/052* [(2010.01)]   *H01M 10/0562* [(2010.01)]
*H01M 10/0565* [(2010.01)]   *H01M 10/42* [(2006.01)]
*H01M 4/02* [(2006.01)]

(52) Gemeinsame Patentklassifikation (CPC):
H01M 10/0562; H01M 4/139; H01M 4/625;
H01M 10/052; H01M 10/0565; H01M 10/4235;
H01M 2004/027

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Heraeus Battery Technology GmbH
63450 Hanau (DE)**

(72) Erfinder:
• **Hantel, Moritz
63801 Kleinostheim (DE)**

• **Samuelis, Dominik
63801 Kleinostheim (DE)**
• **Schneidermann, Christina
63801 Kleinostheim (DE)**
• **Gebauer, Christian
63450 Hanau (DE)**
• **Danz, Martin
63450 Hanau (DE)**

(74) Vertreter: **Heraeus IP
Heraeus Business Solutions GmbH
Intellectual Property
Heraeusstraße 12-14
63450 Hanau (DE)**

(54) **MAKROPORÖSES SILBER-KOHLENSTOFF-VERBUNDMATERIAL**

(57)    Die Erfindung betrifft ein poröses Silber-Kohlenstoff-Verbundmaterial, enthaltend, ein Kohlenstoffpulver. Das Kohlenstoffpulver enthält poröse Kohlenstoffpartikel, wobei die Kohlenstoffpartikel Poren mit einer offenen und durchgängigen Porenstruktur aufweisen. Weiterhin enthält das poröse Silber-Kohlenstoff-Verbundmaterial Silberpartikel, die zumindest teilweise auf der Oberfläche der porösen Kohlenstoffpartikel angebunden sind. Das Silber-Kohlenstoff-Verbundmaterial kann in einer Elektrode einer Festkörperbatterie eingesetzt werden.

*Abbildung 1*

EP 4 513 588 A1

**Beschreibung**

Die vorliegende Erfindung betriff ein poröses Silber-Kohlenstoff-Verbundmaterial, ein Verfahren zur Herstellung des porösen Silber-Kohlenstoff-Verbundmaterials und die Verwendung des Materials in einer Feststoffbatterie.

Batteriebetriebene Anwendungen sind heute aus den meisten Lebensbereichen nicht mehr wegzudenken. Als Batterien kommen sehr häufig Lithiumionenbatterien zum Einsatz. Die heute standardmäßig verwendeten Lithiumionenbatterien verwenden einen flüssigen Elektrolyten. Die Vorteile eines flüssigen Elektrolyten sind eine hohe Ionenleitfähigkeit, was ein schnelles Laden und Entladen ermöglicht. Weiterhin weisen diese Elektrolyten eine hohe chemische Stabilität auf, was für eine hohe Sicherheit und keine unerwünschten Nebenreaktionen sorgt. Die geringe Viskosität führt zu einen guten Ionentransport innerhalb der Zelle. Die Nachteile eines flüssigen Elektrolyten sind die leichte Entflammbarkeit und limitierte Betriebstemperatur der Batterie.

Eine Möglichkeit die Energiedichte und Sicherheit im Vergleich zu den bestehenden LithiumIonen-Batterien zu erhöhen sind Feststoffbatterie. Diese enthalten keinen flüssigen Elektrolyten mehr der auslaufen kann. Als Feststoffelektrolyte eignen sich insbesondere Sulfid-Feststoffelektrolyte (SSE) aufgrund ihrer hohen Lithium-Ionen-Leitfähigkeit (1 - 25 mS cm$^{-1}$) bei Raumtemperatur, die mit der von herkömmlichen Flüssigelektrolyten vergleichbar ist, am besten für den Einsatz in Batterien für Elektrofahrzeuge (EV).

In dem Artikel *High-energy long-cycling all-solid-state lithium metal batteries enabled by silvercarbon composite anodes* (Nature Energy, volume 5, pages 299-308 (2020) https://doi.org/10.1038/s41560-020-0575-z, im Folgenden kurz "*Nature Energy*") wird eine vereinfachte Festkörperbatterie auf Basis eines Sulfid-Feststoffelektrolyts mit sehr hoher Energiedichte von über 900 Wh/l beschrieben. Hierin wird der folgende Schichtaufbau verwendet: Eine Schicht eines NMC-Aktivmaterials wird als Kathode verwendet. Darauf wird eine Schicht eines festen Sulfidelektrolyten vom Type Agyrodite angeordnet. Auf dem Festkörperelektrolyten wiederum wird eine Schicht eines Ag-C-Nanokomposits aufgebracht, die wiederum von einem Edelstahl-Ladungssammler (*current collector*) kontaktiert wird. Als Silber-Kohlenstoff (Ag-C) Nanokomposit wird eine Mischung aus Silber-Nanopartikeln (NPs) und Ruß (Carbon Black) im Gewichtsverhältnis 1:3, sowie ein Polyvinylidenfluorid-Binder eingesetzt. In diesem Aufbau wird auf der Anodenseite kein dezidiertes Anodenmaterial angeordnet. Vielmehr wandert während des Ladevorgangs Lithium zum Ladungssammler und wird zwischen der Silber-Kohlenstoff-Schicht und dem Ladungssammler abgeschieden. Dies ermöglicht besonders dünne Lithiumschichten, die nur sehr schwer in Form von Folien in den Aufbau eingebracht werden können. Ein Nachteil des beschriebenen Ag-C-Komposits besteht darin, dass die Silber-Nanopartikel lose mit dem Kohlenstoff vermischt sind und im Laufe mehrere Lade- und Entladezyklen wandern können. Es wird dort beschrieben, dass die Silbernanopartikel nach und nach zum Ladungssammler wandern.

Des Weiteren wird in *Nature Energy* beschrieben, dass die Batteriematerialien bei relativ hohem Druck verpresst werden müssen. Dadurch sinkt die Porosität des Aufbaus und insbesondre des Ag-C Nanokomposits, was wiederum zu einer geringeren Mobilität der Ladungsträger führen kann.

Ein weiteres typisches Problem von losen Gemischen aus Silberpartikeln und weiteren Partikeln ist die sogenannte Ostwald-Reifung. Hier wachsen große Silberpartikel auf Kosten kleiner Silberpartikel. Dadurch ändert sich im elektrochemischen Betrieb die Silberpartikelgröße und das Material wird weniger elektrochemisch aktiv.

Es war eine Aufgabe der Erfindung, mindestens einen Nachteil des Stands der Technik zu überwinden.

Insbesondere war es eine Aufgabe der Erfindung, ein Silber-Kohlenstoff-Verbundmaterial für eine Batterieelektrode bereitzustellen, bei dem die Silbermigration reduziert ist, sodass das dieses Material als Teil einer Anode länger seine ursprüngliche Struktur behalten kann.

Eine andere bevorzugte Aufgabe bestand darin, ein Silber-Kohlenstoff-Verbundmaterial mit einer verbesserten Durchlässigkeit für Lithium und Lithiumionen bereitzustellen.

Des Weiteren war es eine Aufgabe, ein einfaches Herstellungsverfahren für das verbesserte Silber-Kohlenstoff-Verbundmaterial bereitzustellen.

Eine weitere bevorzugte Aufgabe bestand darin, ein Silber-Kohlenstoff-Verbundmaterial bereitzustellen, das bei geringerem Druck verarbeitet werden kann.

Mindestens eine Aufgabe wird gelöst durch die Gegenstände der unabhängigen Ansprüche. Die abhängigen Ansprüche beschreiben bevorzugte Ausführungsformen.

Ein erster Aspekt der Erfindung betrifft ein poröses Silber-Kohlenstoff-Verbundmaterial, enthaltend,

a) Kohlenstoffpulver umfassend poröse Kohlenstoffpartikel, wobei die Kohlenstoffpartikel Poren mit einer offenen und durchgängigen Porenstruktur aufweisen und

b) Silberpartikel, die zumindest teilweise auf der Oberfläche, insbesondere der zugänglichen Oberfläche, der porösen Kohlenstoffpartikeln angebunden sind.

In dem porösen Silber-Kohlenstoff-Verbundmaterial der vorliegenden Erfindung kann die Ostwald-Reifung der Silberpartikel stark vermindert oder unterdrückt werden. Dadurch kann eine Alterung des Materials als Teil einer Batterieelektrode stark verlangsamt werden.

Verbundmaterial bezeichnet ein Material, bei dem zwei oder mehr Komponenten als dezidiert Stoffe vorliegen, hier Kohlenstoff und Silber, die miteinander verbunden oder vermischt sind. Vorzugsweise sind die Komponenten zumindest teilweise über chemische Bindungen, insbesondere ionische oder kovalente Bindungen miteinander verbunden.

Vorzugsweise ist der Kohlenstoff in dem porösen Silber-Kohlenstoff-Verbundmaterial amorph, graphitisch, nicht-graphitisch oder eine Kombination dieser Modifikationen. Weiterhin bevorzugt ist das poröse Silber-Kohlenstoff-Verbundmaterial ein Pulver.

Das poröse Silber-Kohlenstoff-Verbundmaterial enthält Kohlenstoffpulver. Dieses Kohlenstoffpulver enthält poröse Kohlenstoffpartikel, an deren Oberfläche Silberpartikel angebunden sind, insbesondere durch chemische Abscheidung.

Die porösen Kohlenstoffpartikel des Silber-Kohlenstoff-Verbundmaterials weisen eine Partikelgrößenverteilung auf. Bevorzugt liegt die mittlere Partikelgröße $d_{50}$ der porösen Kohlenstoffpartikel des Silber-Kohlenstoff-Verbundmaterials im Bereich von 1 $\mu$m bis 5 $\mu$m. Diese porösen Kohlenstoffpartikel können eine monomodale, eine bimodale oder eine multimodale Verteilung aufweisen. In einer bevorzugten Ausführung sind die porösen Kohlenstoffpartikel kein *Carbon Black*.

Das poröse Silber-Kohlenstoff-Verbundmaterial weist eine Porengrößenverteilung auf. Dabei wird zwischen Mikroporen mit einem Porendurchmesser von <2 nm, Mesoporen mit einem Porendurchmesser von 2 nm bis 50 nm und Makroporen mit einem Porendurchmesser von >50 nm unterschieden. Die mittlere Porengröße des porösen Silber-Kohlenstoff-Verbundmaterials liegt bevorzugt im Bereich von >50 nm bis 280 nm, insbesondere im Bereich von 60 nm bis 250 nm. Besonders bevorzugt liegt die mittlere Porengröße im Bereich von 75 nm bis 150 nm.

Vorzugsweise beträgt das Porenvolumen der Mikroporen in dem poröse Silber-Kohlenstoff-Verbundmaterial 0,01 - 0,5 cm$^3$ g$^{-1}$, insbesondere 0,02 - 0,25 cm$^3$ g$^{-1}$. Das Porenvolumen der Makroporen liegt beispielsweise im Bereich von 0,3 - 0,5 cm$^3$ g$^{-1}$. Weiterhin bevorzugt liegt der Anteil des Makroporenvolumens am Gesamtporenvolumen des Silber-Kohlenstoff-Verbundmaterials bei mindestens 30% oder mindestens 40%, insbesondere mindestens 50%. Das Gesamtporenvolumen des porösen Silber-Kohlenstoff-Verbundmaterials, insbesondere der Poren im Bereich von 10 nm - 1000 nm, gemessen mittels Quecksilberporosimetrie, liegt vorzugsweise im Bereich von 0,2 cm$^3$/g bis 1,0 cm$^3$/g.

Das Kohlenstoffpulver der vorliegenden Erfindung kann z.B. unter dem Namen Porocarb bezogen werden bei Heraeus Battery Technology GmbH, Deutschland. Das poröse Kohlenstoffmaterial kann alternativ hergestellt werden gemäß WO2019081732A1, Beispiel 2 in Verbindung mit Tabelle 2 mit Alnovol PN 320 Past und Genapol PF20 im Verhältnis 10:6.

Die porösen Kohlenstoffpartikel des porösen Silber-Kohlenstoff-Verbundmaterials weisen eine offene und durchgängige Porenstruktur auf. Das bedeutet, dass vorzugsweise zumindest 50 % des Porenvolumens, insbesondere mindestens 75% des Porenvolumens oder ganz besonders bevorzugt mindestens 90 % des Porenvolumens von außen zugänglich sind. Die offene und durchgängige Porenstruktur kann zum Beispiel anhand einer mittels FIB/REM-Tomographie erstellten 3D-Repräsentation des Primärpartikels bestimmt werden. In einer bevorzugten Ausführungsform kann die Tortuosität der porösen Kohlenstoffpartikel im Bereich von 1,5 - 3 liegen. Ein Vorteil der offenen und durchgängigen Porenstruktur ist, dass die Durchlässigkeit von Lithiumatomen und -Ionen durch die porösen Kohlenstoffpartikel verbessert wird.

Das poröse Kohlenstoff-Verbundmaterial enthält Silberpartikel. Die Silberpartikel sind zumindest teilweise auf der Oberfläche der porösen Kohlenstoffpartikel angebunden. Die Anbindung kann bevorzugt eine Anbindung über chemische Bindungen sein. Die chemische Bindung kann beispielsweise eine kovalente, eine ionische oder eine koordinative Bindung sein. Die Anbindung kann vorzugsweise dadurch erreicht werden, dass die Silberpartikel direkt durch Reduktion einer Silbervorläuferverbindung als elementares Silber abgeschieden werden. Insbesondere ist mit Anbindung nicht gemeint eine physikalische Anhaftung von Silberpartikeln, die zu dem porösen Kohlenstoffmaterial dazu gemischt werden.

Vorzugsweise liegt der Anteil der Silberpartikel im Bereich von 2 - 45 Gew.-%, insbesondere im Bereich von 5 - 10 Gew.-%, bezogen auf das Gesamtgewicht des porösen Kohlenstoffverbundmaterials. Die mittlere Partikelgröße $d_{50}$ der Silberpartikel liegt bevorzugt im Bereich von 5 nm bis 150 nm, insbesondere im Bereich von 10 nm - 120 nm, besonders bevorzugt im Bereich von 20 nm - 110 nm. Es hat sich als vorteilhaft herausgestellt, wenn die mittlere Partikelgröße $d_{50}$ der Silberpartikel mindestens 5 nm beträgt, insbesondere mindestens 10 nm, besonders bevorzugt mindestens 20 nm. Die Partikelgröße kann mittels XRD mit Hilfe der Bragg-Gleichung unter Verwendung der Deby-Scherer-Methode an dem 111 Reflex bestimmt werden.

In einer möglichen Ausgestaltung sind die Silberpartikel zumindest teilweise in den Poren der porösen Kohlenstoffpartikel des Silber-Kohlenstoff-Verbundmaterials angeordnet, insbesondere in den Makroporen.

In einer besonders bevorzugten Ausführungsform sind die Silberpartikel homogen in dem porösen Silber-Kohlenstoff-Verbundmaterials verteilt. Die Verteilung kann mittels ortsaufgelöster EDX in einem Rasterelektronenmikroskop bestimmt werden.

In einer bevorzugten Ausführung enthält das poröse Kohlenstoffverbundmaterial neben Silber keine weiteren Metalle, insbesondere keine absichtlich hinzugefügten Metalle. Davon unberücksichtigt bleiben unvermeidliche Verunreinigungen. Die gewichtsbezogene Menge der unvermeidlichen metallischen Verunreinigungen kann zum Beispiel bei höchstens 1000 ppm oder höchstens 500 ppm liegen.

Die mittels der BET-Methode bestimmte spezifische Oberfläche des porösen Silber-Kohlenstoff-Verbundmaterials liegt bevorzugt im Bereich von 50 $m^2$/g bis 800 $m^2$/g.

In einem zweiten Aspekt betrifft die Erfindung ein Verfahren zur Herstellung des porösen Kohlenstoff-Verbundmaterials, umfassend die Schritte:

a) Bereitstellen eines Kohlenstoffpulvers enthaltend poröse Kohlenstoffpartikeln mit offener und miteinander verbundener Porenstruktur und einer Silbervorläuferverbindung,

b) Kombinieren des Kohlenstoffpulvers mit der Silbervorläuferverbindung in einem Lösungsmittel,

c) umwandeln der Silbervorläuferverbindung in elementares Silber, unter Erhalt einer Suspension des porösen Kohlenstoffverbundmaterials, und

d) Isolieren des porösen Silber-Kohlenstoff-Verbundmaterials.

Vorzugsweise ist der Kohlenstoff in dem Kohlenstoffpulver amorph, graphitisch, nicht-graphitisch oder eine Kombination dieser Modifikationen.

Das Kohlenstoffpulver enthält poröse Kohlenstoffpartikel. Die porösen Kohlenstoffpartikel des Kohlenstoffpulvers weisen eine Partikelgrößenverteilung auf. Bevorzugt liegt die mittlere Partikelgröße dso der porösen Kohlenstoffpartikel des Kohlenstoffpulvers im Bereich von 1 $\mu$m bis 5 $\mu$m. Diese porösen Kohlenstoffpartikel können eine monomodale, eine bimodale oder eine multimodale Verteilung aufweisen. In einer bevorzugten Ausführung sind die porösen Kohlenstoffpartikel kein *Carbon Black.*

Das Kohlenstoffpulver weist Poren mit einer Porengrößenverteilung auf. Dabei wird zwischen Mikroporen mit einem Porendurchmesser von <2 nm, Mesoporen mit einem Porendurchmesser von 2 nm bis 50 nm und Makroporen mit einem Porendurchmesser von >50 nm unterschieden. Die mittlere Porengröße des Kohlenstoffpulvers liegt bevorzugt im Bereich von >50 nm bis 280 nm insbesondere im Bereich von 60 nm bis 250 nm. Besonders bevorzugt liegt die mittlere Porengröße des Kohlenstoffpulvers im Bereich von 75 nm bis 150 nm.

Vorzugsweise beträgt das Mikroporenvolumen in dem Kohlenstoffpulver 0,01 - 0,5 $cm^3$ $g^{-1}$, insbesondere 0,02 - 0,25 $cm^3$ $g^{-1}$. Das Porenvolumen der Makroporen liegt beispielsweise im Bereich von 0,3 - 0,5 $cm^3$ $g^{-1}$. Weiterhin bevorzugt liegt der Anteil des Makroporenvolumens am Gesamtporenvolumen des Kohlenstoffpulvers bei mindestens 30 %, insbesondere mindestens 50%. Das Gesamtporenvolumen des Kohlenstoffpulvers, insbesondere das Volumen der Poren im Bereich von 10 - 1000 nm, gemessen mittels Quecksilberporosimetrie, liegt vorzugsweise im Bereich von 0,2 $cm^3$/g bis 1,0 $cm^3$/g.

Das Kohlenstoffpulver der vorliegenden Erfindung kann z.B. unter dem Namen Porocarb bezogen werden bei Heraeus Battery Technology GmbH, Deutschland. Das poröse Kohlenstoffmaterial kann alternativ hergestellt werden gemäß WO2019081732A1, Beispiel 2 in Verbindung mit Tabelle 2 mit Alnovol PN 320 Past und Genapol PF20 im Verhältnis 10:6.

Weiterhin wird mindestens eine Silbervorläuferverbindung bereitgestellt. Silbervorläuferverbindungen können ausgewählt sein ist aus der Gruppe bestehend aus Silbersalzen und Silberkomplexen. Vorzugsweise sind die Silbervorläuferverbindungen Silber(I)-Verbindungen. Beispiele für Silber(I)-Verbindungen sind Silberacetat, Silbernitrat, Silberhalogenide und Silbersulfat.

Vorzugsweise liegt die Silbervorläuferverbindung in einer Lösung vor. Geeignete Lösungsmitte können zum Beispiel ausgewählt sein aus der Gruppe bestehend aus wässrigen Lösungsmitteln und polaren organischen Lösungsmitteln. Insbesondere ist das Lösungsmittel Wasser.

Die Silbervorläuferverbindung kann optional teilweise oder vollständig im Lösungsmittel gelöst im Lösungsmittel sein, besonders bevorzugt ist sie vollständig gelöst. Als vollständig gelöst kann z.B. eine Lösung verstanden werden, die höchstens 0,5 Gew.-% Feststoff der Silbervorläuferverbindung aufweist, In einer optionalen Ausführung werden neben der Silbervorläuferverbindungen keine anderen Metalle oder Metallverbindungen bereitgestellt.

Das Kohlenstoffpulver wird mit der Silbervorläuferverbindung in einem gemeinsamen Lösungsmittel kombiniert. Im Rahmen der Erfindung kann auch im Zusammenhang mit dem Kohlenstoffpulver von einem Lösungsmittel gesprochen werden, obwohl sich das Kohlenstoffpulver im Lösungsmittel nicht löst sondern eine Suspension von porösen Kohlenstoffpartikel bildet. Es kann optional erst eine Suspension der porösen Kohlenstoffpartikel hergestellt werden, zu der die Silbervorläuferverbindung gegeben wird. Alternativ können die porösen Kohlenstoffpartikeln zu einer bereits existierenden Lösung der Silbervorläuferverbindung gegen werden. In einer weiteren Alternative werden eine Suspension der porösen Kohlenstoffpartikel und eine Lösung der Silbervorläuferverbindung miteinander kombiniert. Dabei kann das Suspensionsmittel der Kohlenstoffpartikel und das Lösungsmittel der Silbervorläuferverbindung gleich oder verschieden sein. Bevorzugt sind die jeweiligen Lösungs- bzw. Suspensionsmittel miteinander mischbar. Lösungs- bzw. Suspensionsmittel im Rahmen der Erfindung können organisch oder wässrig sein. Bevorzugte organische Lösungs- bzw. Suspensionsmittel sind polar.

In Schritt c) erfolgt die Umwandlung der Silbervorläuferverbindung zu elementarem Silber der Oxidationsstufe. Die Umwandlung erfolgt bevorzugt durch Zugabe eines Reduktionsmittels, durch Temperatur oder durch Einwirkung von Licht. Vorzugsweise erfolgt die Umwandlung durch Zugabe eines Reduktionsmittels. Besonders bevorzugt wird der pH-Wert der Suspension vor der Umwandlung auf einen Wert von größer 8, insbesondere auf einen Wert größer als 8,5 eingestellt. Die Wahl des Reduktionsmittels ist vorzugsweise nicht weiter beschränkt und geeignete Reduktionsmitte können vom Fachmann für Partikelsynthese für die jeweilige Silbervorläuferverbindung ausgewählt werden. Besonders bevorzugt ist das Reduktionsmittel ein stickstoffhaltiges Reduktionsmittel, wie z.B. Hydrazin. Bevorzugt kann das eingesetzte Reduktionsmittel rückstandsfrei aus der Reaktion entfernt werden.

Nach der Umsetzung zum elementaren Silber erfolgt die Isolierung des porösen Kohlenstoff-Verbundmaterials. Zum Isolieren können insbesondere bekannte Methoden wie Filtration, Zentrifugation oder ähnliche Verfahren eingesetzt werden.

In einem dritten Aspekt betrifft die Erfindung eine Batterieelektrode aufweisend das poröse Silber -Kohlenstoff-Verbundmaterial. Die Batterieelektrode ist vorzugsweise eine Anode, insbesondere die Anode einer Festkörperbatterie. Optional kann die Batterieelektrode einen Binder, wie zum Beispiel Polyvinylidenfluorid enthalten.

Vorzugsweise kann die Batterieelektrode zusätzlich Lithium umfassen, insbesondere in Form einer Lithiumschicht. Die Lithiumschicht kann bevorzugt eine in-situ abgeschiedene Lithiumschicht sein. Das abgeschiedene Lithium stammt vorzugsweise aus dem Kathodenmaterial einer Feststoffbatterie und wandert während des Ladevorgangs durch die elektrochemische Zelle zum Ladungssammler auf der Seite, auf der die Anode gebildet werden soll. Das poröse Kohlenstoffverbundmaterial kann dabei als Trennschicht zwischen dem Festkörperelektrolyten und dem Ladungssammler, z.B. einer Stahlfolie, fungieren. Die in-situ Abscheidung von Lithium zwischen einer Schicht aus Kohlenstoff und Silber (Ag-C) und einem Ladungssammler (z.B. einer Edelstahlfolie) ist z.B. in Nature Energy beschrieben.

Die Verwendung des porösen Silber-Kohlenstoff-Verbundmaterials kann zu einer verbesserten Lithium-Redox-Reaktion führen und damit insgesamt ein schnelleres Laden und Entladen einer Festkörperbatterie ermöglichen.

In einem vierten Aspekt betrifft die Erfindung eine Festkörperbatterie aufweisend das poröse Kohlenstoffverbundmaterial der vorliegenden Erfindung. Vorzugsweise kann die Pulvermischung aus Ruß und Silbernanopartikeln in der Batterie gemäß *Nature Energy* durch das poröse Kohlenstoffverbundmaterial der vorliegenden Erfindung ersetzt werden.

Dabei weist die Festkörperbatterie vorzugsweise die folgende Struktur auf. Auf einem Ladungssammler, der beispielsweise aus Stahl sein kann, ist eine Lithiumschicht angeordnet. Auf der Lithiumschicht ist das poröse Silber-Kohlenstoff-Verbundmaterial der vorliegenden Erfindung angeordnet. Auf dem Silberkohlenstoffverbundmaterial ist wiederum ein Festkörperelektrolyt angeordnet und auf dem Festkörperelektrolyt ist ein Kathodenmaterial, z.B. ein NMC-Material wie es im Stand der Technik bekannt ist.

Im Folgenden werden bevorzugte Aspekte der Erfindung anhand von beispielhaften Abbildungen erläutert.

In Abbildung 1 ist eine schematische Darstellung eines Partikels des Silber-Kohlenstoff-Verbundmaterials gezeigt.

In Abbildung 2 ist eine schematische Darstellung eines Querschnitts durch eine Festkörperbatterie gemäß der vorliegenden Erfindung gezeigt.

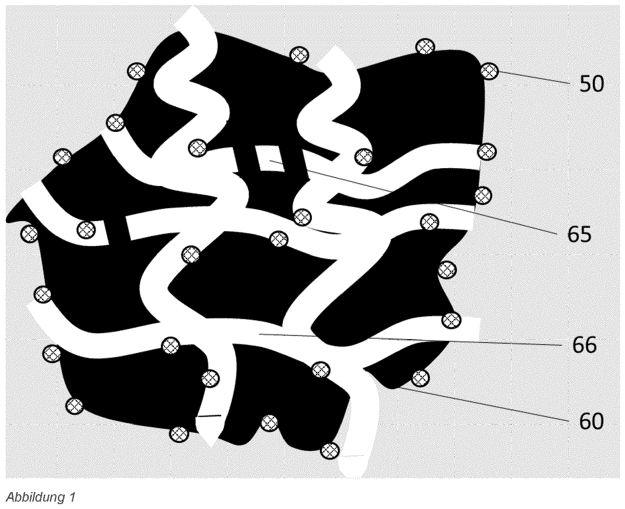

Das Partikel des Silber-Kohlenstoff-Verbundmaterials, das in Abbildung 1 dargestellt ist, enthält ein poröses Kohlenstoffpartikel (60). Das poröse Kohlenstoffpartikel weist Poren auf, die entweder offene Poren (66) sein können und von außen zugänglich sind oder geschlossen Poren (65), die nicht von außen zugänglich sind. Auf der zugänglichen Oberfläche des porösen Kohlenstoffpartikels (60) sind Silberpartikel (50) angeordnet. Diese Silberpartikel (50), vorzugsweise Nanopartikel mit einem mittleren Durchmesser $d_{50}$ von beispielsweise 70 nm, können auf der äußeren Oberfläche des porösen Kohlenstoffpartikels (60) angeordnet sein oder in den offenen Poren (66).

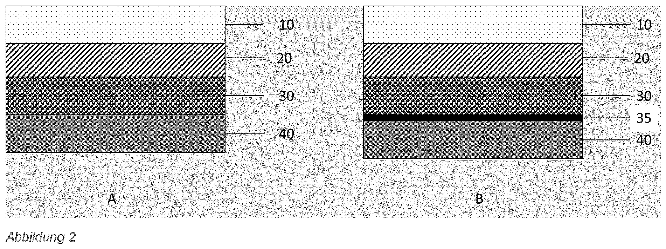

Abbildung 2 zeigt einen schematischen Schichtaufbau einer Feststoffbatterie. Dabei zeigt Abbildung 2A eine Schicht eines Kathodenmaterials (10), dass zum Beispiel ein NMC-Material sein kann (NMC-Schicht (Nickel-Mangan-Cobalt-Oxid)). Darauf ist eine Schicht eines Feststoffelektrolyten (20) angeordnet. Die Schicht des Feststoffelektrolyten (20) wird kontaktiert von einer Schicht des erfindungsgemäßen Silber-Kohlenstoff-Verbundmaterials (30). Zur Ladungsextraktion ist wiederum ein Ladungssammler (40) auf dem Silber-Kohlenstoff-Verbundmaterial (30) angeordnet, der z.B. eine Stahlfolie sein kann. Der dargestellte Schichtaufbau entspricht bevorzugt dem Zustand der Feststoffbatterie vor dem ersten Laden.

In Abbildung 2B ist die gleiche Feststoffbatterie wie in Abbildung 2A dargestellt, mit dem Unterschied, dass zwischen dem Silber-Kohlenstoff-Verbundmaterial (30) und dem Ladungssammler (40) eine Lithiumschicht (35) angeordnet ist. Diese Lithiumschicht (35) kann vorzugsweise dadurch gebildet werden, dass beim Laden der Feststoffbatterie Lithiumionen von dem Kathodenmaterial (z.B. NMC 622 oder NMC 811) zum Ladungssammler wandern und dort abgeschieden werden. Alternativ kann die Lithumschicht auch direkt bei der Herstellung der Feststoffbatterie eingebracht werden.

**Messmethoden**

Quecksilberporosimetrie

Das Gesamtporenvolumen, das spezifische Porenvolumen und die Porengrößen, können mittels Quecksilberporosimetrie gemäß DIN ISO 15901-1:2016 bestimmt werden Die Messungen wurde mit dem Gerät: Porotec Pascal 140 + 440 durchgeführt. Die Messdetails können wie folgt zusammengefasst werden: Probenmasse 30 mg; Oberflächenspannung Quecksilber 0,48 N/m; Kontaktwinkel Quecksilber 141,3°; Messmethode: Scanning; Startfülldruck 0,0128 MPa; Dilatometer: Pulver, kleines Volumen. Zur Probenvorbereitung wurden die Proben 8h bei 110°C unter Vakuum entgast. Vor der Messung wurden mit porösen Glaskugeln mit einem modalen Porendurchmesser von 140,2 nm und einem Porenvolumen von 924,4 mm$^3$/g (ERM-FD122 Referenzmaterial der BAM) kalibriert. Für die Auswertung wurde die Washburn-Methode angewandt und die Dichte von Hg um die aktuelle Temperatur korrigiert.

Partikelgrößenverteilung

Laserbeugung ($D_{10}$, $D_{50}$, $D_{90}$):
Zur Bestimmung der Partikelgröße wurde eine Laserbeugungsmethode nach der ISO-Norm 13320:2020 verwendet. Ein Mastersizer 3000 von Malvern, ausgestattet mit einem He-Ne Laser (Wellenlänge von 632,8 nm mit einer maximalen Leistung von 4 mW) und einer blauen LED (Wellenlänge von 470 nm mit einer maximalen Leistung von 10 mW) und einer Nassdispergiereinheit (Hydro MV) ausgestattet ist, wurde für die Messungen bei einer Umgebungstemperatur von 23 °C durchgeführt. Als Messmedium wurde ein Gemisch aus Isopropanol und deionisiertem Wasser (50% / 50%) verwendet. Das Gemisch wurde in der Dispergiereinheit mit Hilfe des eingebauten Rührers bei 3500 U/min entgast und mit Ultraschall bei maximaler Leistung für 10 Sekunden beschallt. Das Probenmaterial wurde in 5%-iger igepal-Lösung gegeben. Die Probe wurde für 30 Sekunden mit einem Ultraschalfinge vordispergiert. Die Probe wird mit einer Pipette tropfenweise in die Dispergiereinheit mit einer Pipette zugegeben, bis die Transmission des eingesetzten Laserstrahls um 3-7 % reduziert ist. Die Werte von $D_{10}$, $D_{50}$ und $D_{90}$ (volumenbasiert) wurden mit der Malvern Software Mastersizer 3000 Software 3.30 bestimmt. Die Fraunhofer-Theorie wird für Proben verwendet, bei denen die Partikel > 10 $\mu$m sind und die Mie-Theorie wird auf Materialien angewandt, bei denen die Partikel < 10 $\mu$m sind.

Spezifische Oberfläche (Specific surface area, SSA)

Stickstoff-Physisorptionsmessungen zur Bestimmung der spezifischen Oberfläche von Partikeln werden nach DIN ISO 9277:2010 durchgeführt. Für die Messung wird ein NOVA 3000 (von Quantachrome) verwendet, der nach der SMART-Methode (Sorption Method with Adaptive dosing Rate) arbeitet. Als Referenzmaterial werden Quantachrome Aluminiumoxid SARM Katalog Nr. 2001 (13,92 m$^2$/g nach der Mehrpunkt-BET-Methode) und SARM Katalog Nr. 2004 (214,15 m$^2$/g nach der Mehrpunkt-BET-Methode) von Quantachrome verwendet. Den Referenz- und Probenmesszellen werden Füllstäbe hinzugefügt, um das Totvolumen zu verringern. Die Messzellen werden in die BET-Apparatur eingesetzt. Der Sättigungsdampfdruck von Stickstoffgas (N2 4.0) wird bestimmt. Eine Probe wird in eine Glasmesszelle eingewogen, und zwar in einer solchen Menge, dass die Messzelle mit den Füllstäben vollständig gefüllt ist und ein Minimum an Totvolumen entsteht. Die Probe wird 10 Stunde lang bei 200°C unter Vakuum gehalten, um sie zu trocknen. Nach dem Abkühlen wird das Gewicht der Probe ermittelt. Die Glasmesszelle mit der Probe wird auf die Messapparatur aufgesetzt. Um die Probe zu entgasen, wird sie mit einem Saugvermögen, das so gewählt ist, dass kein Material in die Pumpe gesaugt wird, auf einen Enddruck von 10 mbar evakuiert. Für die Datenauswertung wird die NovaWin 11.04 Software verwendet. Es wird eine Mehrpunktanalyse mit 15 Messpunkten durchgeführt und die resultierende spezifische Gesamtoberfläche (BET$_{total}$) in m$^2$/g angegeben. Die Glasmesszellen werden in einem Flüssigstickstoffbad auf 77 K gekühlt. Für die Adsorption wird N2 4.0 mit einer molekularen Querschnittsfläche von 0,162 nm$^2$ bei 77 K für die Berechnung verwendet.

Die empirische T-Plot-Methode wird gemäß ISO 15901-3 :2007 verwendet, um zwischen Beiträgen von Mikroporen und der verbleibenden Porosität bei Relativdrücken von mehr als 0,1 (d. h. Beiträge von Mesoporosität, Makroporosität und externer Oberfläche) zu unterscheiden und die Mikroporenoberfläche (BET$_{micro}$) und das Mikroporenvolumen zu berechnen. Die Datenpunkte der Niederdruckisotherme bis zu einem Cut-off $p/p_0$, typischerweise bis zu 0,1 p/po, werden ausgewählt, um den linearen Abschnitt des t-Plots zu bestimmen. Die Auswahl der Datenpunkte wird durch den Erhalt einer positiven C-Konstante validiert. Das Mikroporenvolumen wird aus dem Ordinatenschnittpunkt bestimmt. Die spezifische Oberfläche der Mikroporen ($BET_{micro}$) kann anhand der Steigung des t-Plots berechnet werden. Die externe spezifische Oberfläche $BET_{external}$ wird definiert, indem die spezifische Oberfläche der Mikropore von der gesamten spezifischen Oberfläche subtrahiert wird: $BET_{external} = BET_{total} - BET_{micro}$.

FIB/REM-Tomographie

Die Tomographie unter Verwendung einer Kombination aus fokussiertem Ionenstrahl (FIB) und Rasterelektronenmikroskopie (REM) wurde eingesetzt, um Informationen über die 3D-Mikrostruktur der porösen Kohlenstoffpartikel zu erhalten.

Die Methode beinhaltet die folgenden Schritte:

-   Probenherstellung

-   Wiederholtes abfräsen mittels FIB und 2D-Bildaufnahme mittels REM

-   3D-Rekonstruktion der Struktur des porösen Kohlenstoffmaterials aus dem Satz der 2D-Bildaufnahmen durch Stapeln,

-   Modellerstellung durch Segmentierung der 3D-Bildrekonstruktion und

-   Analyse der Porosität an dem erstellten Modell.

Probenvorbereitung: Das poröse Kohlenstoffmaterial wird mit 5 Gew.-% Binder gemischt und zu einer Schicht ausgerollt. Aus dieser Probe konnte ein Stück für die FIB/REM-Behandlung vorbereitet werden.

Für die Bildaufnahme kann ein ZEISS 1540XB CrossBeam® (Carl Zeiss AG, Oberkochen, Deutschland) verwendet werden. Hier wird mit einem Strahl beschleunigter Ga-Ionen (FIB) eine dünne Schicht der Probe präzise abgefräst und anschließend mit dem Elektronenstrahl ein Bild aufgenommen (REM). Dieser Vorgang wird mehrere hundert Mal wiederholt, um einen Satz von aufeinanderfolgenden Bildern zu erhalten. Diese Bilder bilden die Grundlage für die 3D-Rekonstruktion. Die Bilder wurden mit einem Abstand von 15 nm zwischen den aufeinanderfolgenden Bildern aufgenommen und die Pixelgröße in jedem Bild betrug 15 nm. Im Datensatz wurde zunächst eine Helligkeitsgradientenkorrektur in Abbildungsrichtung durchgeführt und die Bilder wurden mit einem anisotropen Diffusionsfilter weiterverarbeitet, um Poren und Kohlenstoff eindeutig zu differenzieren. Die Bilder wurden anschließend mit den Softwaretools ImageJ und Matlab gestapelt und in drei Dimensionen ausgerichtet. So wurde eine digitale 3D-Repräsentation des porösen Kohlenstoffmaterials erhalten.

Im nächsten Schritt wurde die durch Bildstapelung erhaltene 3D-Repräsentation segmentiert. Segmentierung bedeutet in diesem Zusammenhang die Berechnung eines 3D-Modells auf der Grundlage des rekonstruierten Bildes, wobei jedes Volumenelement (Voxel) entweder dem Kohlenstoffmaterial oder einer Pore zugeordnet wird.

Die Segmentierung der Bilddaten erfolgte mit einem Algorithmus, der zu den *region-growing* Segmentierungsalgorithmen gehört. Der Algorithmus ist im Detail beschrieben in "Quantification of double-layer Ni/YSZ fuel cell anodes from focused ion beam tomography data", J Joos, et al. J. of power sources 246, 819-830 (2014).

Das durch die Bildsegmentierung gewonnene Modell kann hinsichtlich der Porosität analysiert werden, d.h. ob eine Pore mit dem Porennetzwerk verbunden ist, das mit der Umgebung verbunden ist, oder ob eine Pore isoliert ist und keine Verbindung zur Umgebung hat. Eine Pore, die von der Oberfläche eines Primärpartikels aus zugänglich ist, kann als offene Pore verstanden werden.

Tortuosität

Für die Bestimmung der Tortuosität wurde ein Probenvolumen von 7,5 x 7,5 x 4,5 $\mu m^3$ analysiert, was 500x500x300 Voxeln des durch Segmentierung erhaltenen Models entspricht. Dieses Modell wurde verwendet, um mittels grobkörniges 3D-Modell nach der Methode der finiten Elemente (FEM) mit gleichgroßen Würfeln Informationen über die Porosität zu erhalten. Für die Modellierung wurde ein Homogenisierungsansatz verwendet, um die effektive Leitfähigkeit $\sigma_{eff}$ zu bestimmen, wobei aus dieser effektiven Leitfähigkeit die Tortuosität abgeleitet werden kann. Dazu wird der Ansatz verfolgt, dass das Volumen der Poren mit einem Material mit gegebener Volumenleitfähigkeit $\sigma_0$ gefüllt ist. Die poröse Struktur führt dazu, dass die effektive Leitfähigkeit gegenüber der Ausgangsleitfähigkeit herabgesetzt ist. Die Verringerung der Leitfähigkeit steht über die unten angegebene Formel 1 direkt mit der Tortuosität im Zusammenhang. Zu diesem Zweck wird ein Netz erstellt, indem jedes Voxel der untersuchten Phase (des segmentierten Models) in ein kubisches 8-Knoten-Element umgewandelt wird. Dabei wurden nur Voxel, die über Flächen (und nicht nur über Kanten oder Ecken) verbunden sind, dem Netz hinzugefügt, um Singularitäten am Modelgrenzen zu vermeiden. Auf zwei gegenüberliegenden Außenflächen werden Äquipotentialwerte auferlegt (1 V auf der oberen Fläche, 0 V auf der unteren Fläche). Auf den verbleibenden vier Außenflächen sowie auf den Grenzflächen zwischen den beiden Phasen Material und Pore wurde eine Nullfluss-Randbedingung angewendet. Die Transportgleichung:

$$\nabla \cdot (-\sigma_i \nabla \phi) = 0$$

wird mittels FEM (*finite element method*) gelöst wie in J. Joos, et al. Journal of Power Sources 196 (2011) und M. Ender, et al. Electrochemistry Communications 13 (2011) 166 beschrieben, wobei die intrinsische Leitfähigkeit des Materials $\sigma_0$ vorgegeben ist. Die Tortuosität $\tau$ kann dann nach folgender Formel berechnet werden:

$$\tau = \frac{\sigma_0}{\sigma_{eff}} \varepsilon$$

Formel 1

wobei die Porosität

$\varepsilon = N_i/N_{ges}$ ist mit
$N_i$ = Anzahl der Voxel der Porenphase i und
$N_{ges}$: Gesamtzahl der Voxel des Segmentierten Modells.

Wenn der Datensatz für ein grobkörniges 3D-FEM-Modell zu groß für die verfügbaren Rechenkapazitäten ist, kann das erstellte Modell erweitert werden, z. B. zu einem hochauflösenden 3D-FEM-Modell auf der Grundlage eines C++-Codes. Die Einzelheiten der Berechnung der Tortuosität sind in J. Joos et al. Electrochimica Acta 82 (2012) 268- 276 (Kapitel 7 Berechnung der Mikrostrukturparameter) dargelegt.

**Ausführungsbeispiel**

Beispiel 1

Eine wässrige Lösung, zubereitet aus 9,45 g Silbernitrat (Silberanteil 63,69 Gew.-%; 55,63 mmol Ag) und 100 mL Wasser, wurde zügig zu einer Suspension aus 14,15 g porösem Kohlenstoff (kommerziell erhältlich als Porocarb L11--, Heraeus Battery Technology GmbH, Deutschland) in 1000 mL VE-Wasser zugegeben. Diese Suspension wurde für 12 h Stunden 75°C gerührt. Anschließend wurde der pH-Wert der Suspension mittels 10 Gew.-%iger wässriger Natronlauge auf 9 eingestellt. Im Folgenden wurde eine Lösung bestehend aus 2 g Hydrazinlösung (Hydrazingehalt 35 Gew.-%), 9,65 g Natriumhydroxid und 40 ml Wasser über einen Zeitraum von 0,5 Stunden (1,3 ml/min) hinzudosiert und eine weitere 1 Stunde nachgerührt. Anschließend kühlte die Suspension unter Rühren über Nacht ab (12 h) und das Material wurde filtriert und mit insgesamt 15 L Wasser warm gewaschen. Abschließend wurde das Material im Trockenschrank bei 110°C unter Vakuum und Stickstoff getrocknet.
Mittels Thermogravimetrischer Messung wurde ein Silbergehalt von 32,18 Gew.-% des Produktes (bezogen auf 0 Gew.-% Restfeuchte) bestimmt.

Beispiel 2

Eine wässrige Lösung, zubereitet aus 9,45 g Silbernitrat (Silberanteil 63,69 Gew.-%; 55,63 mmol Ag) und 100 mL Wasser, wurde zügig zu einer Suspension aus 14,15 g porösem Kohlenstoff (kommerziell erhältlich als Porocarb L11--, Heraeus Battery Technology GmbH, Deutschland) in 1000 mL VE-Wasser zugegeben. Diese Suspension wurde für 1 h Stunde bei Raumtermperatur gerührt. Anschließend wurde der pH-Wert der Suspension mittels 10 Gew.-%-iger wässriger Natronlauge auf 9 eingestellt. Im Folgenden wurde eine Lösung bestehend aus 2,8 g Hydrazinlösung (Hydrazingehalt 35 Gew.-%), 9,65 g Natriumhydroxid und 50 ml Wasser über einen Zeitraum von 0,5 Stunden (1,3 ml/min) hinzudosiert. Anschließend wurde die Mischung auf 60°C erhitzt und weitere 3 Stunde nachgerührt. Nach Ansäuern auf pH 4,2 mit verd. Salpetersäure kühlte die Suspension unter Rühren über Nacht ab (12 h). Das Material filtrierte im Anschluss und wurde mit insgesamt 10 L Wasser warm gewaschen bis eine Leitfähigkeit von 3,2 erreicht wurde. Abschließend wurde das Material im Trockenschrank bei 110°C unter Vaccum und Schutzgas Stickstoff getrocknet.
Mittels Thermogravimetrischer Messung wurde ein Silbergehalt von 31,53 Gew.-% des Produktes (bezogen auf 0 Gew.-% Restfeuchte) bestimmt.

**Patentansprüche**

1.  Poröses Silber-Kohlenstoff-Verbundmaterial, enthaltend,

    a)Kohlenstoffpulver enthaltend poröse Kohlenstoffpartikel, wobei die Kohlenstoffpartikel Poren mit einer offenen und durchgängigen Porenstruktur aufweisen, und
    b)Silberpartikel, die zumindest teilweise auf der Oberfläche der porösen Kohlenstoffpartikel angebunden sind.

2.  Poröses Silber-Kohlenstoff-Verbundmaterial gemäß Anspruch 1, wobei das poröse Silber-Kohlenstoff-Verbundmaterial Makroporen aufweist, wobei der Anteil des Makroporenvolumens am Gesamtporenvolumen mindestens 30 % beträgt, gemessen mittels Quecksilberporosimetrie.

3.  Poröses Silber-Kohlenstoff-Verbundmaterial gemäß Anspruch 1 oder 2, wobei die Silberpartikel zumindest teilweise chemisch auf der Oberfläche der porösen Kohlenstoffpartikeln angebunden sind.

4.  Poröses Silber-Kohlenstoff-Verbundmaterial gemäß einem der Ansprüche 1 - 3, wobei der Anteil der Silberpartikel im Bereich von 2 - 45 Gew.-% liegt, bezogen auf das Gesamtgewicht des porösen Silber-Kohlenstoff-Verbundmaterials.

5.  Poröses Silber-Kohlenstoffverbundmaterial gemäß einem der Ansprüche 1 - 4, wobei das Gesamtporenvolumen des porösen Silber-Kohlenstoff-Verbundmaterials im Bereich von 0,2 $cm^3/g$ bis 1 $cm^3/g$ liegt, gemessen mittels Quecksilberporosimetrie.

6.  Poröses Silber-Kohlenstoff-Verbundmaterial gemäß einem der Ansprüche 1 - 5, wobei die mittlere Porengröße des porösen Silber-Kohlenstoff-Verbundmaterials im Bereich von 50 nm bis 280 nm liegt, gemessen mit Quecksilberporosimetrie.

7.  Poröses Silber-Kohlenstoff-Verbundmaterial gemäß einem der Ansprüche 1 - 6, wobei die mittlere Partikelgröße dso der Silberpartikel im Bereich von 5 nm bis 150 nm liegt, gemessen mitXRD.

8.  Poröses Silber-Kohlenstoff-Verbundmaterial gemäß einem der Ansprüche 1 - 7, wobei die mittlere Partikelgröße dso der porösen Kohlenstoffpartikel des Silber-Kohlenstoff-Verbundmaterials im Bereich von 1 $\mu$m bis 5 $\mu$m liegt, gemessen durch Laserbeugung.

9.  Poröses Silber-Kohlenstoff-Verbundmaterial gemäß einem der Ansprüche 1 - 8, wobei die mittels BET gemessene spezifische Oberfläche des porösen Silber-Kohlenstoff-Verbundmaterials im Bereich von 50 $m^2/g$ bis 800 $m^2/g$ liegt.

10. Verfahren zur Herstellung des porösen Silber-Kohlenstoff-Verbundmaterials gemäß einem der Ansprüche 1- 9, umfassend die Schritte:

    a) Bereitstellen eines Kohlenstoffpulvers enthaltend poröse Kohlenstoffpartikeln, wobei die porösen Kohlenstoffpartikel eine offene und miteinander verbundene Porenstruktur aufweisen, und einer Silbervorläuferverbindung,
    b) Kombinieren des porösen Kohlenstoffpulvers mit der Silbervorläuferverbindung in einem Lösungsmittel,
    c) umwandeln der Silbervorläuferverbindung in elementares Silber, unter Erhalt einer Suspension des porösen Kohlenstoffverbundmaterials, und
    d) Isolieren des porösen Silber-Kohlenstoff-Verbundmaterials.

11. Verfahren gemäß Anspruch 10, wobei die Silbervorläuferverbindung ausgewählt ist aus der Gruppe bestehend aus Silbersalzen und Silberkomplexen.

12. Verfahren gemäß Anspruch 11, wobei die Silbervorläuferverbindung in einer Lösung vorliegt.

13. Verfahren gemäß Anspruch 12, wobei das Einleiten der Umwandlungsreaktion durch Zugabe eines Reduktionsmittels, insbesondere eines stickstoffhaltigen Reduktionsmittels erfolgt.

14. Batterieelektrode aufweisend das poröse Silber-Kohlenstoff-Verbundmaterial gemäß einem der Ansprüche 1 - 9.

15. Batterieelektrode nach Anspruch 14, wobei die Batterieelektrode die Anode einer Festkörperbatterie ist.

**16.** Festkörperbatterie aufweisend das poröse Silber-Kohlenstoff-Verbundmaterial gemäß einem der Ansprüche 1 - 9.

Abbildung 1

*Abbildung 2*

| Europäisches Patentamt European Patent Office Office européen des brevets | **EUROPÄISCHER RECHERCHENBERICHT** | Nummer der Anmeldung EP 23 19 2925 |
| --- | --- | --- |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
| --- | --- | --- | --- |
| X<br>Y | WO 2023/092030 A1 (GROUP14 TECH INC [US]) 25. Mai 2023 (2023-05-25)<br>* Tabelle 3, Scaffold #1 bis #5, #8 *<br>* Beispiel 6 *<br>* Ansprüche 13, 18 *<br>----- | 1-8,14, 15<br><br>16 | INV.<br>H01M4/139<br>H01M4/62<br>H01M10/052<br>H01M10/0562<br>H01M10/0565<br>H01M10/42<br><br>ADD.<br>H01M4/02 |
| X | LIU JIE ET AL: "Porphyrin-based covalent triazine framework and its carbonized derivative as catalyst scaffold of Au and Ag nanoparticles for 4-nitrophenol reduction",<br>MICROPOROUS AND MESOPOROUS MATERIALS, ELSEVIER, AMSTERDAM ,NL,<br>Bd. 330, 2. Dezember 2021 (2021-12-02), XP086918538,<br>ISSN: 1387-1811, DOI:<br>10.1016/J.MICROMESO.2021.111611<br>[gefunden am 2021-12-02]<br>* Zusammenfassung *<br>* Abschnitte 2.2 und 2.3, S. 2-3 *<br>* Abschnitt 3, erster Satz *<br>* Tabelle 1 *<br>----- | 1,3,4, 9-13 | |
| Y | LEE YONG-GUN ET AL: "High-energy long-cycling all-solid-state lithium metal batteries enabled by silver-carbon composite anodes",<br>NATURE ENERGY, NATURE PUBLISHING GROUP UK, LONDON,<br>Bd. 5, Nr. 4, 9. März 2020 (2020-03-09), Seiten 299-308, XP037096134,<br>DOI: 10.1038/S41560-020-0575-Z<br>[gefunden am 2020-03-09]<br>* Zusammenfassung *<br>* Abbildung 1d *<br>----- | 16 | RECHERCHIERTE SACHGEBIETE (IPC)<br><br>H01M |

Der vorliegende Recherchenbericht wurde für alle Patentansprüche erstellt

| Recherchenort | Abschlußdatum der Recherche | Prüfer |
| --- | --- | --- |
| München | 2. Februar 2024 | Gregori, Giuliano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**EP 4 513 588 A1**

## ANHANG ZUM EUROPÄISCHEN RECHERCHENBERICHT
## ÜBER DIE EUROPÄISCHE PATENTANMELDUNG NR.

EP 23 19 2925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**02-02-2024**

| Im Recherchenbericht angeführtes Patentdokument | Datum der Veröffentlichung | Mitglied(er) der Patentfamilie | Datum der Veröffentlichung |
|---|---|---|---|
| WO 2023092030 A1 | 25-05-2023 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019081732 A1

**In der Beschreibung aufgeführte Nicht-Patentliteratur**

- *Nature Energy*, 2020, vol. 5, 299-308, https://doi.org/10.1038/s41560-020-0575-z
- **J JOOS et al.** Quantification of double-layer Ni/YSZ fuel cell anodes from focused ion beam tomography data. *J. of power sources*, 2014, vol. 246, 819-830
- **J. JOOS et al.** *Journal of Power Sources*, 2011, vol. 196
- **M. ENDER et al.** *Electrochemistry Communications*, 2011, vol. 13, 166
- Berechnung der Mikrostrukturparameter. **J. JOOS et al.** Electrochimica Acta. 2012, vol. 82, 268-276